(19)

Europäisches
Patentamt
European
Patent Office
Office européen
des brevets

(11) **EP 4 601 375 A1**

(12) **EUROPEAN PATENT APPLICATION**
published in accordance with Art. 153(4) EPC

(43) Date of publication:
**13.08.2025   Bulletin 2025/33**

(21) Application number: **23889086.7**

(22) Date of filing: **06.11.2023**

(51) International Patent Classification (IPC):
*H04W 72/04* (2023.01)   *H04W 72/23* (2023.01)
*H04L 1/08* (2006.01)   *H04L 5/00* (2006.01)
*H04L 27/26* (2006.01)

(52) Cooperative Patent Classification (CPC):
**H04L 1/08; H04L 5/00; H04L 27/26; H04W 72/04;
H04W 72/23**

(86) International application number:
**PCT/KR2023/017688**

(87) International publication number:
**WO 2024/101826 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **07.11.2022  KR 20220147030**

(71) Applicant: **Samsung Electronics Co., Ltd.
Suwon-si, Gyeonggi-do 16677 (KR)**

(72) Inventors:
• **YANG, Hyewon**
  **Suwon-si, Gyeonggi-do 16677 (KR)**
• **RYU, Hyunsuk**
  **Suwon-si, Gyeonggi-do 16677 (KR)**
• **YI, Junyung**
  **Suwon-si, Gyeonggi-do 16677 (KR)**
• **CHOI, Seunghoon**
  **Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD AND APPARATUS FOR OPERATING WIRELESS COMMUNICATION SYSTEM ON BASIS OF BANDWIDTH**

(57)   The present disclosure relates to a 5G or 6G communication system for supporting higher data transmission rates. Also, the present disclosure provides methods for improving operations and performances of a base station and a terminal when the base station is operated in a bandwidth smaller than 5 MHz. According to the present disclosure, the system can be operated even in a restricted bandwidth that was not introduced before, and a control signal receiving performance may be improved.

FIG. 8

EP 4 601 375 A1

**Description**

**[Technical Field]**

The disclosure relates to a method and apparatus for operation of a wireless communication system based on bandwidth. More specifically, the disclosure relates to a method and apparatus for enabling a wireless communication system (e.g., 5G, new radio (NR)) to operate even in a smaller bandwidth.

**[Background Art]**

5th generation (5G) mobile communication technologies define broad frequency bands such that high transmission rates and new services are possible, and can be implemented not only in "Sub 6 GHz" bands such as 3.5 GHz, but also in "Above 6 GHz" bands referred to as mmWave including 28 GHz and 39 GHz. In addition, it has been considered to implement 6th generation (6G) mobile communication technologies (referred to as Beyond 5G systems) in terahertz bands (e.g., 95 GHz to 3 THz bands) in order to accomplish transmission rates fifty times faster than 5G mobile communication technologies and ultra-low latencies one-tenth of 5G mobile communication technologies.

At the beginning of the 5G mobile communication technologies, in order to support services and to satisfy performance requirements in connection with enhanced mobile broadband (eMBB), ultra-reliable low latency communications (URLLC), and massive machine-type communications (mMTC), there has been ongoing standardization regarding beamforming and massive multi-input multi-output (MIMO) for mitigating radio-wave path loss and increasing radio-wave transmission distances in mmWave, supporting numerologies (e.g., operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding locations and states of vehicles transmitted by the vehicles and for enhancing user convenience, new radio unlicensed (NR-U) aimed at system operations conforming to various regulation-related requirements in unlicensed bands, NR UE power saving, non-terrestrial network (NTN) which is UE-satellite direct communication for providing coverage in an area in which communication with terrestrial networks is unavailable, and locationing.

Moreover, there has been ongoing standardization in air interface architecture/protocol regarding technologies such as industrial internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures. i.e., 1b-step random access channel (RACH) for NR. There also has been ongoing standardization in system architecture/service regarding a 5G baseline architecture (e.g., service based architecture or service based interface) for combining network functions virtualization (NFV) and software-defined networking (SDN) technologies, and mobile edge computing (MEC) for receiving services based on UE locations.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended reality (XR) for efficiently supporting augmented reality (AR), virtual reality (VR), mixed reality (MR) and the like, 5G performance improvement and complexity reduction by utilizing artificial intelligence (AI) and machine learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as full dimensional MIMO (FD-MIMO), array antennas and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

**[Disclosure of Invention]**

**[Technical Problem]**

The technical problem to be solved in various embodiments of the disclosure is to provide a method and apparatus for operating a wireless communication system based on bandwidth.

In addition, the technical problem to be solved in various embodiments of the disclosure is to provide a method for transmitting control information for operating a wireless communication system in a smaller bandwidth, a method and apparatus for configuring a parameter for supporting a smaller bandwidth and performing communication using it.

**[Solution to Problem]**

To solve the aforementioned technical problems, a method performed by a terminal in a communication system according to an embodiment of the disclosure includes receiving a master information block (MIB) including information on a control resource set (CORESET) and a search space associated with system information; receiving a physical downlink control channel (PDCCH) based on the information on the CORESET and the search space associated with the system information; and receiving the system information based on the PDCCH, and it may be characterized that the MIB indicates one index among a plurality of indexes corresponding to a number of resource blocks (RBs) and a number of symbols in the CORESET associated with the system information, the MIB is associated with a frequency band having a channel bandwidth size smaller than 5 MHz, and the plurality of indexes corresponding to the number of RBs and the number of symbols in the CORESET associated with the system information include at least one index corresponding to the number of RBs smaller than 24 RBs.

A method performed by a base station in a communication system according to an embodiment of the disclosure includes transmitting a master information block (MIB) including information on a control resource set (CORESET) and a search space associated with system information; transmitting a physical downlink control channel (PDCCH) based on the information on the CORESET and the search space associated with the system information; and transmitting the system information based on the PDCCH, and it may be characterized that the MIB indicates one index among a plurality of indexes corresponding to a number of resource blocks (RBs) and a number of symbols in the CORESET associated with the system information, the MIB is associated with a frequency band having a channel bandwidth size smaller than 5 MHz, and the plurality of indexes corresponding to the number of RBs and the number of symbols in the CORESET associated with the system information include at least one index corresponding to the number of RBs smaller than 24 RBs.

A terminal in a communication system according to an embodiment of the disclosure includes a transceiver; and a controller configured to receive a master information block (MIB) including information on a control resource set (CORESET) and a search space associated with system information, receive a physical downlink control channel (PDCCH) based on the information on the CORESET and the search space associated with the system information, and receive the system information based on the PDCCH, and it may be characterized that the MIB indicates one index among a plurality of indexes corresponding to a number of resource blocks (RBs) and a number of symbols in the CORESET associated with the system information, the MIB is associated with a frequency band having a channel bandwidth size smaller than 5 MHz, and the plurality of indexes corresponding to the number of RBs and the number of symbols in the CORESET associated with the system information include at least one index corresponding to the number of RBs smaller than 24 RBs.

A base station in a communication system according to an embodiment of the disclosure includes a transceiver; and a controller configured to transmit a master information block (MIB) including information on a control resource set (CORESET) and a search space associated with system information, transmit a physical downlink control channel (PDCCH) based on the information on the CORESET and the search space associated with the system information, and transmit the system information based on the PDCCH, and it may be characterized that the MIB indicates one index among a plurality of indexes corresponding to a number of resource blocks (RBs) and a number of symbols in the CORESET associated with the system information, the MIB is associated with a frequency band having a channel bandwidth size smaller than 5 MHz, and the plurality of indexes corresponding to the number of RBs and the number of symbols in the CORESET associated with the system information include at least one index corresponding to the number of RBs smaller than 24 RBs.

**[Advantageous Effects of Invention]**

According to various embodiments of the disclosure, a method and apparatus for operating a wireless communication system based on bandwidth are provided, thereby enabling a 5G system to operate even in a bandwidth smaller than 5 MHz.

**[Brief Description of Drawings]**

FIG. 1 is a diagram showing an example of a basic structure of a time-frequency resource domain of the 5G system.

FIG. 2 is a diagram showing an example of a time domain mapping structure of a synchronization signal and a beam sweeping operation.

FIG. 3 is a diagram showing an example of a random access procedure.

FIG. 4 is a diagram showing an example of a procedure in which a UE reports UE capability information to a base station.

FIG. 5 is a diagram showing an example of a method for increasing the number of symbols configurable in one CORESET when resources of CORESET are configured in a band smaller than 5 MHz.

FIG. 6 is a diagram showing another example of a method for increasing the number of symbols configurable in one CORESET when resources of CORESET are configured in a band smaller than 5 MHz.

FIG. 7 is a diagram showing examples of a method for repeatedly transmitting the same PDCCH through distinct time resources.

FIG. 8 is a diagram showing a process when a specific UE initially accesses a system operating in a specific bandwidth smaller than 5 MHz.

FIG. 9 is a diagram showing a UE transceiver device according to an embodiment of the disclosure.

FIG. 10 is a block diagram showing an example of components of a UE according to an embodiment of the disclosure.

FIG. 11 is a block diagram showing an example of components of a base station according to an embodiment of the disclosure.

**[Mode for the Invention]**

Hereinafter, embodiments of the disclosure will be described in detail with reference to the accompanying drawings. In the following description of the disclosure, a detailed description of known functions or components will be omitted when it may make the subject matter of the disclosure unnecessarily unclear. The terms which will be described below are terms defined in consideration of the functions in the disclosure, and may be varied according to users, intentions of operators, or customs. Therefore, the definitions of the terms should be made based on the contents throughout the description.

The advantages and features of the disclosure and the manner of achieving them will become apparent with reference to embodiments described in detail below and with reference to the accompanying drawings. The disclosure may, however, be embodied in many different forms and should not be construed as being limited to the embodiments set forth herein. Rather, these embodiments are provided so that the disclosure will be thorough and complete and will fully convey the scope of the disclosure to those skilled in the art. The disclosure is only defined by the scope of claims. In the disclosure, the same reference numerals are used to indicate the same elements.

It will be understood that each block of the flowchart illustrations, and combinations of blocks in the flowchart illustrations, may be implemented by computer program instructions. These computer program instructions may be provided to a processor of a general purpose computer, special purpose computer, or other programmable data processing apparatus to produce a machine, such that the instructions, which are executed via the processor of the computer or other programmable data processing apparatus, generate means for implementing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block(s).

In addition, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term 'unit' used in embodiments refers to a software or hardware component such as a field programmable gate array (FPGA) or application specific integrated circuit (ASIC), and the 'unit' performs certain tasks. However, the 'unit' is not limited to software or hardware. The 'unit' may be constituted to reside on an addressable storage medium and constituted to execute on one or more processors. Thus, the 'unit' may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and 'units' may be combined into fewer components and 'units' or further separated into additional components and 'units'. In addition, the components and 'units' may be implemented to operate one or more central processing units (CPUs) in a device or a secure multimedia card. Also, in an embodiment, the 'unit' may include one or more processors.

In the following description of the disclosure, a detailed description of known functions or components will be omitted when it may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various kinds of identification information, and the like are illustratively used for convenience of explanation. Therefore, the disclosure is not limited by the terms as used below, and other terms referring to subjects having equivalent technical meanings may be used.

In the following description, a physical channel and a signal may be used interchangeably with data or a control signal. For example, physical downlink shared channel (PDSCH) is a term referring to a physical channel through which data is transmitted, but PDSCH may also be used to refer to data. That is, in the disclosure, the expression 'transmitting a physical channel' may be interpreted equivalently to the expression 'transmitting data or a signal through a physical channel'.

In the following disclosure, upper signaling refers to a signal transmission method in which a base station transmits a signal to a terminal via a downlink data channel of a physical layer, or a terminal transmits a signal to a base station via an uplink data channel of a physical layer. Upper signaling may be understood as radio resource control (RRC) signaling or media access control (MAC) control element (CE).

For convenience of explanation, the disclosure uses terms and names defined in 3GPP new radio (NR) (5G mobile communication standard) standards. However, the disclosure is not limited by such terms and names, and can be equally applied to systmes that conform other standards. In addition, the term terminal may refer to not only a mobile phone, a smart phone, IoT devices, and sensors, but also other wireless communication devices.

Hereinafter, a base station is an entity performing resource allocation of a terminal, and may be at least one of a gNode B (gNB), an eNode B (eNB), a Node B, a base station (BS), a radio access unit, a base station controller, or a node on a network. A terminal may include a user equipment (UE), a mobile station (MS), a cellular phone, a smart phone, a computer, or a multimedia system capable of performing a communication function. Of course, it is not limited to the above examples.

In order to handle the explosive increase in mobile data traffic, the initial standard of the 5$^{th}$ generation (5G) system or new radio (NR) access technology, which is the next-generation communication system following long term evolution (LTE) (or evolved universal terrestrial radio access (E-UTRA)) and LTE-advanced (LTE-A) (or E-UTRA evolution), has been completed. While the existing mobile communication systems have focused on traditional voice/data communications, the 5G system aims to satisfy various services and requirements, such as the enhanced Mobile BroadBand (eMBB) service for improving the existing voice/data communications, the Ultra-Reliable and Low Latency Communication (URLLC) service, and the massive Machine Type Communication (MTC) service.

While the system transmission bandwidth per single carrier in the legacy LTE and LTE-A systems is limited to a maximum of 20 MHz, the 5G system aims to provide ultra-high-speed data services of up to several Gbps by utilizing an ultra-wide bandwidth that is much wider than 20 MHz. Accordingly, the 5G system is considering an ultra-high frequency band from several GHz to up to 100 GHz, where it is relatively easy to secure ultra-wide bandwidth frequencies, as candidate frequencies. Additionally, it is possible to secure wide bandwidth frequencies for the 5G system through frequency reassignment or allocation in a frequency band ranging from several hundred MHz to several GHz used in the legacy mobile communication system.

The radio waves in the above ultra-high frequency band have wavelengths of several mm and are also called millimeter waves (mmWave). However, in the ultra-high frequency band, the path loss of radio waves increases in proportion to the frequency band, so the coverage of mobile communication systems decreases.

In order to overcome the disadvantage of coverage reduction in the ultra-high frequency band, a beamforming technology that concentrates the radiated energy of radio waves to a predetermined target point by using a plurality of antennas and thereby increases the transmission distance of radio waves is applied. That is, a signal to which the beamforming technology is applied has a relatively narrow beam width of the signal, and the radiated energy is concentrated within the narrowed beam width, thereby increasing the transmission distance. The beamforming technology may be applied to each of transmitting and receiving ends. In addition to the effect of increasing coverage, the beamforming technology has the effect of reducing interference in an area other than the beamforming direction. In order for the beamforming technology to operate properly, an accurate measurement and feedback method of the transmission/reception beams are required. The beamforming technology may be applied to a control channel or data channel corresponding one-to-one between a certain UE and a base station. Also, to increase coverage, the beamforming technology may be applied to common signals transmitted by a base station to multiple UEs within the system, such as a synchronization signal, a physical broadcast channel (PBCH), a control channel for transmitting system information, and a data channel. When the beamforming technology is applied to a common signal, the beam sweeping technology, which transmits a signal while changing the beam direction, is additionally applied so that the common signal can reach UEs located at any location within a cell.

Another requirement of the 5G system is an ultra-low latency service with a transmission delay of approximately 1 ms between the transmitting and receiving ends. As one scheme of reducing the transmission delay, a frame structure design based on a short transmission time interval (TTI) compared to LTE and LTE-A is needed. TTI is a basic time unit for performing scheduling, and the TTI of the legacy LTE and LTE-A systems is 1 ms corresponding to the length of one subframe. For example, in order to satisfy the requirement for the ultra-low latency service of the 5G system, a short TTI of 0.5 ms, 0.25 ms, 0.125 ms, etc. which is shorter than that of the legacy LTE and LTE-A systems, is possible.

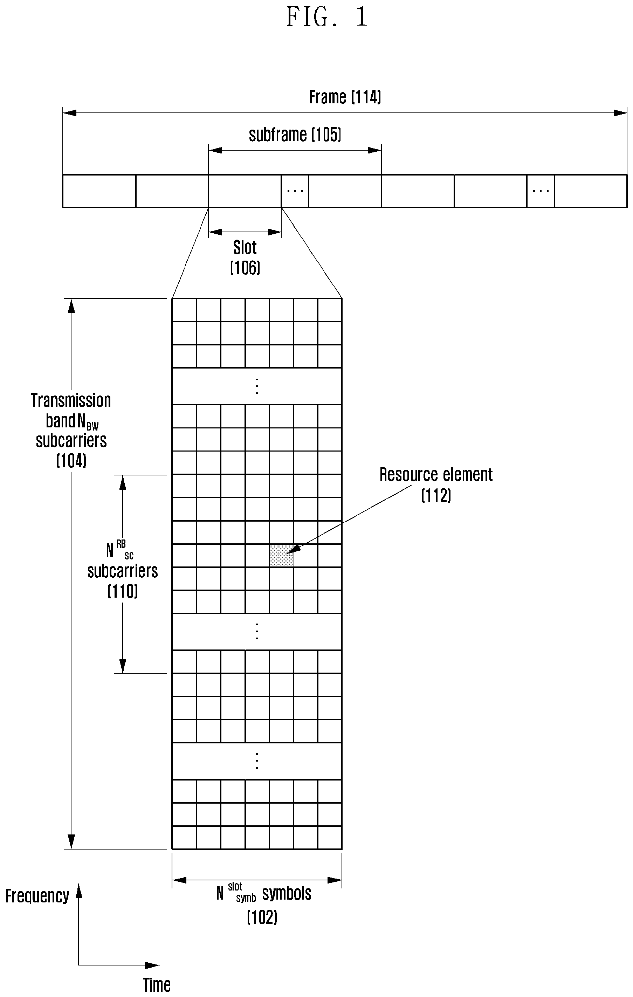

FIG. 1 is a diagram showing an example of a basic structure of a time-frequency resource domain of the 5G system. That is, FIG. 1 is a diagram showing the basic structure of the time-frequency resource domain, which is a radio resource area in which data or a control channel of the 5G system is transmitted.

With reference to FIG. 1, the horizontal axis in FIG. 1 represents the time domain, and the vertical axis represents the frequency domain. The minimum transmission unit in the time domain of the 5G system is an orthogonal frequency division multiplexing (OFDM) symbol, and $N_{symb}^{slot}$ symbols 102 may constitute one slot 106, and $N_{slot}^{subframe}$ slots may constitute one subframe 105. The length of the subframe is 1.0 ms, and ten subframes may constitute a frame 114 of 10 ms. The minimum transmission unit in the frequency domain is a subcarrier, and the bandwidth of the entire system transmission bandwidth may be composed of a total of $N_{BW}$ subcarriers 104.

In the time-frequency domain, the basic unit of resources is a resource element (RE) 112, which may be represented by an OFDM symbol index and a subcarrier index. A resource block (RB) (or physical resource block (PRB)) may be defined as $N_{sc}^{RB}$ consecutive subcarriers 110 in the frequency domain. In the 5G system, $N_{sc}^{RB}$ is 12, and a data rate may increase in proportion to the number of RBs scheduled to the UE.

In the 5G system, the base station may map data in RB units and generally perform scheduling for RBs that constitute one slot for a given UE. That is, in the 5G system, the basic time unit in which scheduling is performed may be a slot, and the basic frequency unit in which scheduling is performed may be an RB.

The number of OFDM symbols $N_{symb}^{slot}$ is determined depending on the length of cyclic prefix (CP) added to each symbol to prevent interference between symbols. For example, if the normal CP is applied, $N_{symb}^{slot}$ may be 14, and if the extended CP is applied, $N_{symb}^{slot}$ may be 12. The extended CP is applied to a system in which the radio transmission distance is relatively greater than the normal CP to maintain orthogonality between symbols. In the case of the normal CP, since the ratio of the CP length to the symbol length is maintained at a constant value, the overhead due to the CP may be maintained constant regardless of the subcarrier spacing. That is, if the subcarrier spacing is small, the symbol length increases, and thus the CP length may also increase. Conversely, if the subcarrier spacing is large, the symbol length decreases, and thus the CP length may be reduced. The symbol length and the CP length can be inversely proportional to the subcarrier spacing.

In order to satisfy various services and requirements in the 5G system, various frame structures can be supported by adjusting the subcarrier spacing. For example,

[0038] - In terms of the operating frequency band, the larger the subcarrier spacing, the more advantageous it is for recovering phase noise in the highfrequency band.

[0039] - In terms of the transmission time, the larger the subcarrier spacing, the smaller the symbol length in the time domain, and consequently, the smaller the slot length, which is advantageous for supporting ultra-low latency services such as URLLC.

[0040] - In terms of the cell size, the greater the CP length, the larger the cell can be supported, so the smaller the subcarrier spacing, the larger the cell can be supported. In mobile communications, a cell is a concept that refers to the area covered by one base station.

The subcarrier spacing, the CP length, etc. are essential information for OFDM transmission and reception. The base station and the UE must recognize the subcarrier spacing, the CP length, etc. as common values to enable smooth transmission and reception. Table 1 shows the relationship among subcarrier spacing configuration ($\mu$), subcarrier spacing ($\Delta f$), and CP length supported by the 5G system.

[Table 1]

| $\mu$ | $\Delta f = 2^{\mu} \cdot 15$[kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

Table 2 shows the number of symbols per slot ( $N_{symb}^{slot}$ ), the number of slots per frame ( $N_{slot}^{frame,\mu}$ ), and the number of slots per subframe ( $N_{slot}^{subframe,\mu}$ ), for each subcarrier spacing configuration ($\mu$) in the case of the normal CP.

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 shows the number of symbols per slot ( $N_{symb}^{slot}$ ), the number of slots per frame ( $N_{slot}^{frame,\mu}$ ), and the number of slots per subframe ( $N_{slot}^{subframe,\mu}$ ), for each subcarrier spacing configuration ($\mu$) in the case of the extended CP.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In the early stage of the introduction of the 5G system, at least coexistence or dual mode operation with the legacy LTE or/and LTE-A (hereinafter referred to as LTE/LTE-A) systems is expected. As a result, the legacy LTE/LTE-A may provide stable system operation to the UE, and the 5G system may provide improved services to the UE. Therefore, the frame structure of the 5G system needs to include at least the frame structure or essential parameter set (subcarrier spacing = 15 kHz) of the LTE/LTE-A.

For example, comparing the frame structure with a subcarrier spacing configuration $\mu=0$ (hereinafter referred to as frame structure A) and the frame structure with a subcarrier spacing configuration $\mu=1$ (hereinafter referred to as frame structure B), the subcarrier spacing and RB size of the frame structure B are twice as large as those of the frame structure A, and the slot length and symbol length are twice as small. In the case of frame structure B, two slots may constitute one subframe, and 20 subframes may constitute one frame.

Generalizing the frame structure of the 5G system provides high scalability by enabling that essential parameter sets such as subcarrier spacing, CP length, and slot length have an integer multiple relationship for each frame structure. In addition, a subframe of a fixed length of 1 ms may be defined to represent a reference time unit that is independent of the frame structure.

The frame structure can be applied to correspond to various scenarios. In terms of cell size, since a greater CP length can support a larger cell, the frame structure A can support a relatively larger cell than the frame structure B. In terms of operating frequency band, since a larger subcarrier spacing is advantageous for recovering phase noise in a highfrequency band, the frame structure B can support a relatively higher operating frequency than the frame structure A. In terms of service, since a smaller slot length, which is a basic time unit of scheduling, is advantageous for supporting an ultra-low latency service such as URLLC, the frame structure B can be relatively suitable for the URLLC service than the frame structure A.

Hereinafter, in the description of the disclosure, uplink (UL) may refer to a radio link through which a UE transmits data or a control signal to a base station, and downlink (DL) may refer to a radio link through which a base station transmits data or a control signal to a UE.

In the initial access step where the UE initially accesses the system, the UE can synchronize the downlink time and frequency from a synchronization signal transmitted by the base station through cell search, and acquire a cell identity (cell ID). Then, the UE can receive a physical broadcast channel (PBCH) using the acquired cell ID, and acquire a master information block (MIB), which is essential system information, from the PBCH. Additionally, the UE can acquire cell-common transmission/reception-related control information by receiving system information (system information block (SIB)) transmitted by the base station. The cell-common transmission/reception-related control information may include random access-related control information, paging-related control information, and common control information for various physical channels.

The synchronization signal is a signal that serves as a reference for cell search, and the subcarrier spacing may be applied to suit the channel environment, such as phase noise, by frequency band. For a data channel or a control channel, the subcarrier spacing may be applied differently depending on the service type in order to support various services as described above.

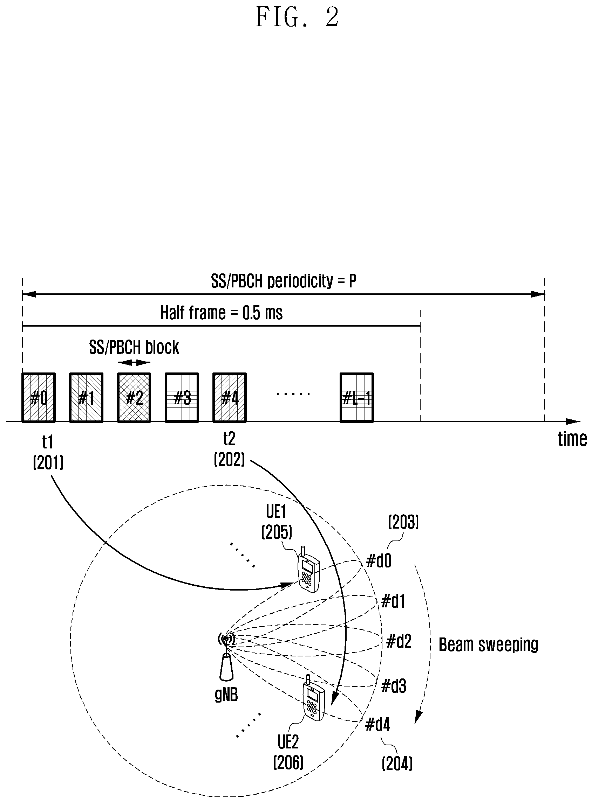

FIG. 2 is a diagram showing an example of a time domain mapping structure of a synchronization signal and a beam sweeping operation.

For explanation, the following components can be defined:

-    PSS (Primary Synchronization Signal): It is a signal that serves as a reference for DL time/frequency synchronization and provides some information about the cell ID.
-    SSS (Secondary Synchronization Signal): It serves as a reference for DL time/frequency synchronization and provides remaining information about the cell ID. Additionally, it can serve as a reference signal for demodulation of the PBCH.
-    PBCH (Physical Broadcast Channel): It provides master information block (MIB), which is essential system information required for transmission and reception of a data channel and a control channel of the UE. The essential system information may include information such as search space-related control information indicating radio resource mapping information of a control channel, scheduling control information for a separate data channel for transmission of system information, and a system frame number (SFN) which is a frame unit index that serves as a timing reference.
-    SS/PBCH Block (Synchronization Signal/PBCH Block or SSB): The SS/PBCH block consists of N OFDM symbols and is composed of a combination of PSS, SSS, PBCH, etc. In a system to which the beam sweeping technology is applied, the SS/PBCH block is the minimum unit for applying beam sweeping. In the 5G system, N may be 4. The base station may transmit up to L SS/PBCH blocks, and the L SS/PBCH blocks are mapped within a half frame (0.5 ms). In addition, the L SS/PBCH blocks are periodically repeated in units of a predetermined periodicity P. The periodicty P may be notified to the UE via signaling from the base station. If there is no separate signaling for the periodicity P, the UE applies a pre-agreed default value.

With reference to FIG. 2, FIG. 2 shows an example in which beam sweeping is applied in units of SS/PBCH block over time. In the example of FIG. 2, UE1 205 receives an SS/PBCH block using a beam radiated in the direction of #d0 203 by beamforming applied to SS/PBCH block #0 at time t1 201. In addition, UE2 206 receives an SS/PBCH block using a beam radiated in the direction of #d4 204 by beamforming applied to SS/PBCH block #4 at time t2 202. The UE can acquire an optimal synchronization signal through a beam radiated from the base station in the direction where the UE is located. For example, UE1 205 may have difficulty in acquiring time/frequency synchronization and essential system information from an SS/PBCH block through a beam radiated in the direction of #d4, which is far from the location of UE1.

In addition to the initial access procedure described above, the UE may receive the SS/PBCH block to determine whether the radio link quality of the current cell is maintained at a certain level or higher. Also, in a handover procedure in which the UE moves from the current cell to a neighbor cell, the UE may receive the SS/PBCH block of the neighbor cell to determine the radio link quality of the neighbor cell and acquire time/frequency synchronization of the neighbor cell.

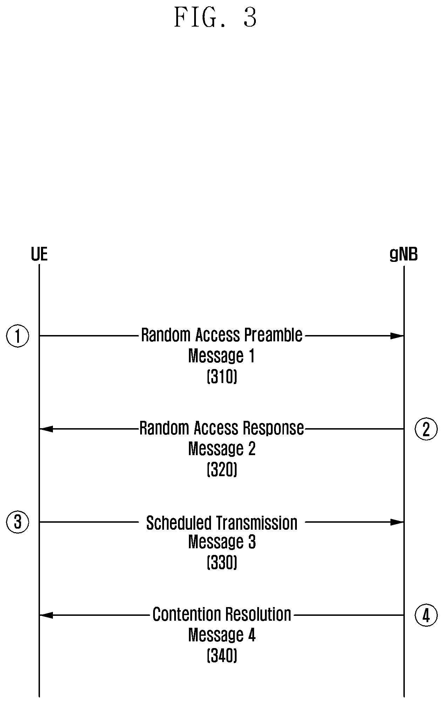

After the UE acquires MIB and system information from the base station through the initial access procedure, the UE may perform a random access procedure to switch the link with the base station to a connected state (or RRC_CONNECTED state). Upon completion of the random access procedure, the UE switches to the connected state, and one-to-one communication becomes possible between the base station and the UE. Hereinafter, the random access procedure will be described in detail with reference to FIG. 3.

FIG. 3 is a diagram showing an example of a random access procedure.

With reference to FIG. 3, in the first step 310 of the random access procedure, a UE transmits a random access preamble to a base station (gNB). The random access preamble, which is the initial transmission message of the UE in the random access procedure, may be referred to as message 1. The base station may measure a transmission delay value between the UE and the base station from the random access preamble and synchronize the uplink. At this time, the UE may arbitrarily select which random access preamble to use within a random access preamble set given by system information in advance. In addition, the initial transmission power of the random access preamble may be determined according to a path loss, measured by the UE, between the base station and the UE. In addition, the UE may determine a transmission beam direction of the random access preamble from a synchronization signal received from the base station and transmit the random access preamble.

In the second step 320, the base station transmits an uplink transmission timing adjustment command to the UE based on the transmission delay value measured from the random access preamble received in the first step 310. In addition, the base station may transmit an uplink resource and power control command to be used by the UE as scheduling information. The scheduling information may include control information for the uplink transmission beam of the UE.

If the UE fails to receive a random access response (RAR) (or message 2), which is scheduling information for message 3, from the base station within a predetermined time in the second step 320, the first step 310 may be performed again. If the first step 310 is performed again, the UE may increase the transmission power of the random access preamble by a predetermined step (power ramping) and transmit it, thereby increasing the probability that the base station receives the random access preamble.

In the third step 330, the UE transmits uplink data (message 3) including its UE ID to the base station through an uplink data channel (physical uplink shared channel (PUSCH)) by using the uplink resources allocated in the second step 320. The transmission timing of the uplink data channel for transmitting the message 3 may follow the timing control command received from the base station in the second step 320. In addition, the transmission power of the uplink data channel for transmitting the message 3 may be determined in consideration of the power control command received from the base station in the second step 320 and the power ramping value of the random access preamble. The uplink data channel for transmitting the message 3 may refer to an initial uplink data signal that the UE transmits to the base station after transmitting the random access preamble.

In the fourth step 340, if the base station determines that the UE has performed random access without collision with other UEs, the base station transmits data (message 4) including the ID of the UE that transmitted the uplink data in the third step 330 to the UE. If the UE receives the signal transmitted by the base station in the fourth step 340 from the base station, the UE may determine that the random access is successful. Then, the UE may transmit HARQ-ACK information indicating whether the message 4 has been successfully received to the base station through an uplink control channel (physical uplink control channel (PUCCH)).

If the data transmitted by the UE in the third step 330 collides with data of another UE and thereby the base station fails to receive a data signal from the UE, the base station may not transmit any more data to the UE. Accordingly, if the UE fails to receive the data transmitted from the base station in the fourth step 340 within a certain period of time, the UE may determine that the random access procedure has failed, and may start over from the first step 310.

If the random access procedure is successfully completed, the UE switches to the connected state, and one-to-one communication becomes possible between the base station and the UE. The base station may receive UE capability information from the UE in the connected state and adjust scheduling by referring to the UE capability information of the UE. Through the UE capability information, the UE may inform the base station whether the UE itself supports a certain function, the maximum allowable value of the function supported by the UE, etc. Accordingly, the UE capability information reported by each UE to the base station may have different values for respective UEs.

For example, the UE may report the UE capability information including at least some of the following types of control information to the base station.

- Control information related to a frequency band supported by the UE
- Control information related to a channel bandwidth supported by the UE
- Control information related to a maximum modulation scheme supported by the UE
- Control information related to a maximum number of beams supported by the UE
- Control information related to a maximum number of layers supported by the UE
- Control information related to CSI reporting supported by the UE
- Control information on whether the UE supports frequency hopping
- Control information related to bandwidth in the case that carrier aggregation (CA) is supported
- Control information on whether cross carrier scheduling is supported in the case that carrier aggregation is supported

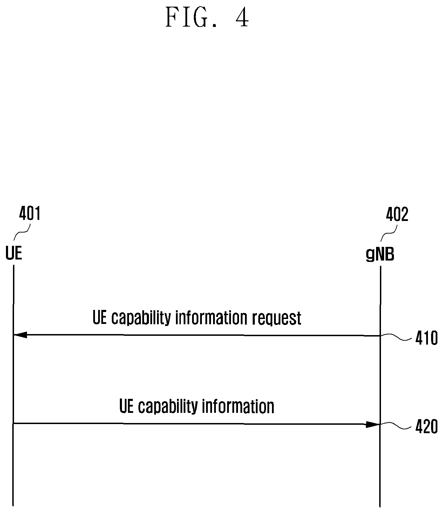

FIG. 4 is a diagram showing an example of a procedure in which a UE reports UE capability information to a base station.

With reference to FIG. 4, in step 410, the base station (gNB) 402 may transmit a UE capability information request message to the UE 401. In response to the UE capability information request of the base station, the UE transmits UE capability information to the base station in step 420.

The UE connected to the base station through the above process can perform one-to-one communication in the RRC_CONNECTED state. On the other hand, the UE that is not connected is in the RRC_IDLE state, and the operations of the UE in that state are divided as follows.

- UE-specific discontinuous reception (DRX) cycle operation configured by an upper layer
- Operation of receiving a paging message from the core network
- System information acquisition
- Neighbor cell related measurement operation and cell reselection

In the 5G system, in order to reduce the energy and time consumed for the initial access of the UE, a new UE state called RRC_INACTIVE is defined. In addition to the operations performed by the RRC_IDLE UE, the RRC_INACTIVE UE performs the following operations.

- Storage of access stratum (AS) information required for cell access
- UE-specific DRX cycle operation configured by an RRC layer
- Configuring and periodically updating RAN-based notification area (RNA) that can be utilized during handover by an RRC layer
- Monitoring RAN-based paging messages transmitted via I-RNTI

Hereinafter, a scheduling method by which the base station transmits downlink data to the UE or instructs UE's uplink data transmission will be described.

Downlink control information (DCI) is control information transmitted by the base station to the UE via downlink and may include downlink data scheduling information or uplink data scheduling information for a given UE. In general, the base station may pefrom independeny channel-coding on the DCI for each UE and then transmit the DCI to each UE via a physical downlink control channel (PDCCH) which is a downlink physical control channel.

As to the UE to be scheduled, the base station may apply a predetermined DCI format according to the purpose such as whether it is scheduling information for downlink data (downlink assignment), scheduling information for uplink data (uplink grant), or DCI for power control.

The base station may transmit downlink data to the UE through a physical downlink shared channel (PDSCH), which is a physical channel for downlink data transmission. Scheduling information such as a specific mapping position of the PDSCH in the time and frequency domain, a modulation scheme, HARQ-related control information, and power control information may be notified by the base station to the UE through DCI related to downlink data scheduling information among DCIs transmitted through the PDCCH.

The UE may transmit uplink data to the base station through a physical uplink shared channel (PUSCH), which is a physical channel for uplink data transmission. Scheduling information such as a specific mapping position of the PUSCH in the time and frequency domain, a modulation scheme, HARQ-related control information, and power control information may be notified by the base station to the UE through DCI related to uplink data scheduling information among DCIs transmitted through the PDCCH.

A time-frequency resource to which the PDCCH is mapped is called a control resource set (CORESET). The CORESET may be configured with all or some frequency resources in the bandwidth supported by the UE in the frequency domain. In the time domain, it may be configured with one or more OFDM symbols, which may be defined as a CORESET duration. The base station may configure one or more CORESETs to the UE through upper layer signaling (e.g., system information, master information block (MIB), radio resource control (RRC) signaling). Configuring the CORESET to the UE may mean providing information such as a CORESET identity, a frequency location of the CORESET, and a symbol length of the CORESET. Information that the base station provides to the UE to configure the CORESET may include at least part of the information included in Table 4.

[Table 4]

| | |
|---|---|
| ControlResourceSet ::= | SEQUENCE { |
| controlResourceSetId | ControlResourceSetId, |
| (CORESSET identity) | |
| frequencyDomainResources | BIT STRING (SIZE (45)), |
| (Frequency domain resources) | |
| duration | INTEGER |
| (1..maxCoReSetDuration), | |
| (CORESSET length) | |
| cce-REG-MappingType | CHOICE { |
| (CCE-to-REG mapping type) | |
| interleaved | SEQUENCE { |
| reg-BundleSize | ENUMERATED {n2, n3, n6}, |
| (REG bundle size) | |
| interleaverSize | ENUMERATED {n2, n3, n6} |
| (Interleaver size) | |
| shiftIndex | |
| INTEGER(0..maxNrofPhysicalResourceBlocks-1) | |

OPTIONAL -- Need S

(Interleaver shift)

},

nonInterleaved                    NULL

},

precoderGranularity          ENUMERATED  {sameAsREG-bundle,

allContiguousRBs},

(Precoding granulariy)

tci-StatesPDCCH-ToAddList          SEQUENCE(SIZE

(1..maxNrofTCI-StatesPDCCH)) OF TCI-StateId      OPTIONAL,    --

Cond NotSIB1-initialBWP

(QCL configuration information)

tci-StatesPDCCH-ToReleaseList          SEQUENCE(SIZE

(1..maxNrofTCI-StatesPDCCH)) OF TCI-StateId      OPTIONAL,    --

Cond NotSIB1-initialBWP

(QCL configuration information)

tci-PresentInDCI                ENUMERATED {enabled}

OPTIONAL, -- Need S

(QCL indicator configuration information in DCI)

Pdcch-DMRS-ScramblingID          INTEGER (0..65535)

OPTIONAL, -- Need S

(PDCCH DMRS scramling ID)

}

The CORESET may be composed of $\overline{N_{RB}^{CORESET}}$ RBs in the frequency domain and $N_{symb}^{CORESET} \in \{1,2,3\}$ symbols in the time domain. The NR PDCCH may be composed of one or more control channel elements (CCEs). One CCE may be composed of six resource element groups (REGs), and the REG may be defined as one RB in one OFDM symbol. In one CORESET, the REGs may be indexed in time-first order, starting with REG index 0 from the first OFDM symbol of the CORESET, the lowest RB.

As transmission methods for PDCCH, an interleaved method and a non-interleaved method can be supported. For each CORESET, the base station can configure interleaved transmission or non-interleaved transmission to the UE through upper layer signaling. Interleaving may be performed in units of REG bundles. The REG bundle may be defined as a set of one or more REGs. Based on the interleaved or non-interleaved transmission configured by the base station, the UE can determine a CCE-to-REG mapping scheme in the corresponding CORESET as shown in Table 5.

[Table 5]

The CCE-to-REG mapping for a control-resource set can be interleaved or non-interleaved and is described by REG bundles:

- REG bundle $i$ is defined as REGs $\{i_L, i_L+1,...,i_L+_L-1\}$ where $L$ is the REG bundle size, $i = 0,1,...,N_{REG}^{CORESET}/L - 1$, and $N_{REG}^{CORESET} = N_{RB}^{CORESET} N_{symb}^{CORESET}$ is the number of REGs in the CORESET

- CCE $j$ consists of REG bundles $\{f(6j/L), f(6j/L+1),...,f(6j/L+6/L-1)\}$ where $f(\cdot)$ is an interleaver

For non-interleaved CCE-to-REG mapping, $L = 6$ and $f(x) = x$.

For interleaved CCE-to-REG mapping, $L \in \{2,6\}$ for $N_{symb}^{CORESET} = 1$ and $L \in \{N_{symb}^{CORESET}, 6\}$ for $N_{symb}^{CORESET} \in \{2,3\}$. The interleaver is defined by

$$f(x) = (rC + c + n_{shift}) \bmod \left(N_{REG}^{CORESET}/L\right)$$

$$x = cR + r$$
$$r = 0,1,...,R - 1$$
$$c = 0,1,...,C-1$$
$$C = N_{REG}^{CORESET}/(LR)$$

where $R \in \{2,3,6\}$.

The base station can inform the UE of configuration information such as which symbol within a slot the PDCCH is mapped to and the transmission periodicity through signaling.

Now, a search space of the PDCCH is described. The number of CCEs required for transmission of the PDCCH may be 1, 2, 4, 8, or 16 depending on an aggregation level (AL). Different CCE numbers may be used for link adaptation of the downlink control channel. For example, if AL=L, one downlink control channel may be transmitted through L CCEs. The UE performs blind decoding to detect a signal in a state of not knowing information about the downlink control channel, and for this, the search space representing a set of CCEs may be defined. The search space is a set of downlink control channel candidates composed of CCEs that the UE has to attempt to decode at a given AL. Since there are various ALs that make one bundle with 1, 2, 4, 8, or 16 CCEs, the UE may have multiple search spaces. A search space set may be defined as a set of search spaces at all configured ALs.

The search space may be classified into a common search space (CSS) and a UE-specific search space (USS). A certain group of UEs or all UEs may examine the common search space of the PDCCH so as to receive cell common control information such as dynamic scheduling for a system information block (SIB) or a paging message. For example, by examining the common search space of the PDCCH, the UE may receive scheduling allocation information of the PDSCH for receiving system information. In the case of the common search space, since a certain group of UEs or all UEs must receive the PDCCH, it may be defined as a set of CCEs that have been agreed upon in advance. Scheduling allocation information for a UE-specific PDSCH or PUSCH may be received by the UE by examining a UE-specific search space of the PDCCH. The UE-specific search space may be defined UE-specifically as a function of UE's identity (ID) and various system parameters.

The base station may configure the configuration information for the search space of the PDCCH to the UE through upper layer signaling (e.g., SIB, MIB, RRC signaling). For example, the base station may configured, to the UE, the number of PDCCH candidates at each aggregation level L, the monitoring periodicity for the search space, the monitoring occasion of symbol units in the slot for the search space, the search space type (common search space or UE-specific search space), the combination of RNTI and DCI format to be monitored in the corresponding search space, the CORESET index to monitor the search space, etc. For example, the parameters for the search space for the PDCCH may include information as shown in Table 6 below.

[Table 6]

```
SearchSpace ::=                    SEQUENCE {

searchSpaceId                  SearchSpaceId,

(Search space identity)

controlResourceSetId  ControlResourceSetId       OPTIONAL, --

Cond SetupOnly

(CORESET identity)

monitoringSlotPeriodicityAndOffset              CHOICE {

(Monitoring slot level periodicity and offset)

sl1                                          NULL,

sl2                                          INTEGER (0..1),

sl4                                          INTEGER (0..3),

sl5                                  INTEGER (0..4),

sl8                                          INTEGER (0..7),

sl10                                 INTEGER (0..9),

sl16                                 INTEGER (0..15),

sl20                                 INTEGER (0..19)

sl40                                 INTEGER (0..39),

sl80                                 INTEGER (0..79),

sl160                                INTEGER (0..159),

sl320                                INTEGER (0..319),

sl640                                INTEGER (0..639),
```

```
sl1280                              INTEGER (0..1279),

sl2560                              INTEGER (0..2559)

}

OPTIONAL,     -- Cond Setup

duration                     INTEGER (0..2559)

OPTIONAL,     -- Need R

(Monitoring duration)

monitoringSymbolsWithinSlot  BIT     STRING     (SIZE     (14))

        OPTIONAL,

            Cond Setup

(Monitoring symbol location within slot)

nrofCandidates                      SEQUENCE {

(Number of PDCCH candidates per aggregation level)

aggregationLevel1     ENUMERATED {n0, n1, n2, n3, n4, n5, n6,

n8},

aggregationLevel2     ENUMERATED {n0, n1, n2, n3, n4, n5, n6,

n8},

aggregationLevel4     ENUMERATED {n0, n1, n2, n3, n4, n5, n6,

n8},

aggregationLevel8     ENUMERATED {n0, n1, n2, n3, n4, n5, n6,

n8},

aggregationLevel16    ENUMERATED {n0, n1, n2, n3, n4, n5, n6, n8}

}

OPTIONAL,     -- Cond Setup

searchSpaceType                     CHOICE {

(Search space type)

common                              SEQUENCE {

(Common search space)
```

```
dci-Format0-0-AndFormat1-0                    SEQUENCE {

...

}

OPTIONAL,      -- Need R

dci-Format2-0              SEQUENCE {

nrofCandidates-SF1                             SEQUENCE {

aggregationLevel1        ENUMERATED {n1, n2}    OPTIONAL,
-- Need R

aggregationLevel2        ENUMERATED {n1, n2}    OPTIONAL,
-- Need R

aggregationLevel4        ENUMERATED {n1, n2}    OPTIONAL,
-- Need R

aggregationLevel8        ENUMERATED {n1, n2}    OPTIONAL,
-- Need R

aggregationLevel16       ENUMERATED {n1, n2}    OPTIONAL,
-- Need R

},

...

}

OPTIONAL,      -- Need R

dci-Format2-1              SEQUENCE {

...

}

OPTIONAL,      -- Need R

dci-Format2-2              SEQUENCE {

...

}

OPTIONAL,      -- Need R

dci-Format2-3              SEQUENCE {
```

```
              dummy1                    ENUMERATED {sl1, sl2, sl4,
          sl5, sl8, sl10, sl116, sl20} OPTIONAL,      -- Cond Setup
    dummy2                    ENUMERATED {n1, n2},
    ...
    }
    OPTIONAL,      -- Need R
    },
    ue-Specific                                        SEQUENCE {
    (UE-specific search space)
    dci-Formats                          ENUMERATED
    {formats0-0-And-1-0, formats0-1-And-1-1},
    ...
    }
    }
    OPTIONAL      -- Cond Setup2
    }
```

Based on the configuration information, the base station may configure one or more search space sets to the UE. According to some embodiments, the base station may configure search space set 1 and search space set 2 to the UE. In the search space set 1, the UE may be configured to monitor DCI format A scrambled by X-RNTI in the common search space. In the search space set 2, the UE may be configured to monitor DCI format B scrambled by Y-RNTI in the UE-specific search space.

According to the configuration information, one or multiple search space sets may exist in the common search space or the UE-specific search space. For example, search space set #1 and search space set #2 may be configured as the common search space, and search space set #3 and search space set #4 may be configured as the UE-specific search space.

In the common search space, the UE may monitor the following combinations of the DCI format and the RNTI. However, the disclosure is not limited to the following example.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the UE may monitor the following combinations of the DCI format and the RNTI. However, the disclosure is not limited to the following example.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The above RNTIs may follow the definitions and usages below.

- Cell RNTI (C-RNTI): For UE-specific PDSCH or PUSCH scheduling
- Temporary Cell RNTI (TC-RNTI): For UE-specific PDSCH scheduling
- Configured Scheduling RNTI (CS-RNTI): For semi-statically configured UE-specific PDSCH scheduling
- Random Access RNTI (RA-RNTI): For PDSCH scheduling in random access step
- Paging RNTI (P-RNTI): For scheduling of PDSCH in which paging is transmitted
- System Information RNTI (SI-RNTI): For scheduling of PDSCH in which system information is transmitted
- Interruption RNTI (INT-RNTI): For notifying of whether to puncture PDSCH
- Transmit Power Control for PUSCH RNTI (TPC-PUSCH-RNTI): For indication of power control command for PUSCH
- Transmit Power Control for PUCCH RNTI (TPC-PUCCH-RNTI): For indication of power control command for PUCCH
- Transmit Power Control for SRS RNTI (TPC-SRS-RNTI): For indication of power control command for SRS

The above-described DCI formats may follow the definition as in Table 7.

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

The search space of the aggregation level L in the CORESET p and the search space set s may be expressed by Equation below.

[Equation 1]

$$L \cdot \left\{ \left( Y_{p,n_{s,f}^{\mu}} + \left\lfloor \frac{m_{s,n_{CI}} \cdot N_{\mathrm{CCE},p}}{L \cdot M_{p,s,\mathrm{max}}^{(L)}} \right\rfloor + n_{CI} \right) mod \left\lfloor N_{\mathrm{CCE},p}/L \right\rfloor \right\} + i$$

- L: Aggregation level
- $n_{CI}$: Carrier index
- $N_{\mathrm{CCE},p}$: Total number of CCEs existing in the CORESET p
- $n^{\mu}_{s,f}$: Slot index
- $M^{(L)}_{s,\mathrm{max}}$: Number of PDCCH candidates of aggregation level L
- $m_{s,n_{CI}}=0, ..., M^{(L)}_{p,s,\mathrm{max}}-1$: PDCCH candidate group index of aggregation level L
- i=0, ..., L-1

- $Y_{p,n_{s,f}^{\mu}} = \left( A_p \cdot Y_{p,n_{s,f}^{\mu}-1} \right) mod\ D$ , $Y_{p,-1} = n_{\mathrm{RNTI}} \neq 0$, $A_0 = 39827$, $A_1 = 39829$, $A_2 = 39839$, $D = 65537$
- $n_{\mathrm{RNTI}}$: UE identity

In the case of the common search space, the $Y_{p,n_{s,f}^{\mu}}$ value may correspond to zero.

In the case of the UE-specific search space, the $Y_{p,n_{s,f}^{\mu}}$ value may correspond to a value that changes according to the UE ID (C-RNTI or ID configured by the base station to the UE) and the time index.

In the case of a resource that receives control information to receive system information in the initial access, a separate table is provided because all the parameters presented above are not configured. Upon acquiring the MIB in the initial access process, the UE can obtain information included in Table 8. This can be found through the pdcch-ConfigSIB1 field in the MIB. The CORESET and the search space that can be received in the initial access step can be found through the pdcch-ConfigSIB1 information. In the following description, the corresponding CORESET is called CORESET#0, and the PDCCH search space in CORESET#0 is called Search space#0. In addition, a predefined table for configuring CORESET#0 and Search space#0 is specified in the standard. Therefore, by indicating the index of the predefined table with the bit information of pdcch-ConfigSIB 1, information is provided on which resource the UEs attempting the initial access can receive the PDCCH in CORESET#0 from.

[Table 8]

| MIB ::= SEQUENCE { |
|---|
| systemFrameNumber BIT STRING (SIZE (6)), |

| (SFN identifier) |
|---|
| subCarrierSpacingCommon ENUMERATED {scs15or60, scs30or120}, |
| (CORESET#0 and SIB1 subcarrier spacing) |
| ssb-SubcarrierOffset INTEGER(0…15), |
| (Offset between ssb and all frequency resources) |
| dmrs-TypeA-Position ENUMERATED {pos2, pos3}, |
| (dmrs first symbol position) |
| pdcch-ConfigSIB1 PDCCH-ConfigSIB1, |
| (CORESET#0 and Search space#0 index) |
| cellBarred ENUMERATED {barred, notBarred}, |
| (Whether cell barred or not) |
| intraFreqReselection ENUMERATED {allowed, notallowed}, |
| (Whether intra-cell selection/reselection restricted) |
| spare BIT STRING (SIZE (1)), |
| (Spare) |
| } |

As described above, the method of configuring CORESET resources (e.g., the number of RBs, the number of symbols, etc.) varies depending on whether it is CORESET#0 or not. CORESET#0 is configured through the MIB of PBCH, and CORESETs except CORESET#0 may be configured with resources through upper layer signaling. When resources corresponding to CORESET#0 or CORESET are configured, the base station maps the PDCCH to be transmitted to the configured CORESET resources in accordance with a CCE-to-REG mapping rule. At this time, in a bandwidth smaller than 5 MHz, the number of CCEs to which the PDCCH can be mapped is restricted due to the limited number of frequency resources, i.e., because of the small number of RBs that can constititue the CORESET. Accordingly, the maximum configurable AL value is limited, which reduces the block error rate (BLER) performance per transmission block of the PDCCH.

In order to improve the degradation of PDCCH transmission performance due to the limited number of RBs in a bandwidth smaller than 5 MHz, a method of increasing the total number of resources used for PDCCH transmission by further allocating time resources may be considered. As one of methods of using more time resources, there is a method of increasing the number of symbols that can be allocated to CORESET#0 or CORESET. In the following description, the CORESET is used to refer to CORESET#0 and CORESETs excluding CORESET#0 together.

Meanwhile, the maximum number of RBs configurable in a bandwidth smaller than 5 MHz may be applied differently depending on the configured bandwidth. Therefore, the range of the number of RBs configurable in the CORESET varies depending on the bandwidth size operated by the base station. Table 9 shows an example of the maximum number of RBs configurable depending on the bandwidth size when a 15 kHz subcarrier spacing is used. Even for the same bandwidth, the maximum number of RBs may vary depending on the spectrum utilization and the subcarrier spacing, and the current standard stipulates that when a 15 kHz subcarrier spacing is used, the maximum number of RBs configurable in a 5 MHz bandwidth is 25. In addition, the number of bandwidths smaller than 5 MHz that the base station can operate may be defined as one or plural. For the convenience of explanation, the following description is based on the assumption that the bandwidth size that the base station can operate is 3 MHz and the maximum number of RBs is 15, but various embodiments of the disclosure may be applied to bandwidths other than 3 MHz and various spectrum utilizations and subcarrier spacings.

[Table 9]

| Bandwidth [MHz] | 3 | | | 4 | | | 5 |
|---|---|---|---|---|---|---|---|
| Spectrum Utilization [%] | 80 | 90 | 95 | 80 | 90 | 95 | 90 |
| Maximum Number of RBs (15kHz SCS) | 13 | 15 | 15 | 17 | 20 | 21 | 25 |

Hereinafter, through specific embodiments, a method for configuring CORESET#0 when a bandwidth smaller than 5 MHz is configured, a control information transmission method capable of enhancing BLER performance degraded due to a limited number of frequency resources, and related operations and procedures of a base station and a UE, which are proposed in the disclosure, are described.

<First Embodiment>

The first embodiment describes the operations of the base station and the UE that support the 5G communication system in a bandwidth smaller than 5 MHz. Specifically, a method for configuring or being configured with CORESET#0 resources in a small bandwidth is described.

In general, the configuration of CORESET#0 is determined based on a given table depending on subcarrier spacing configuration, and the minimum number of frequency resources configurable in CORESET#0 is 24 RBs. Therefore, in order to configure CORESET#0 resources in a bandwidth smaller than 5 MHz, it is necessary to define the maximum number of RBs that can be operated in the corresponding bandwidth. Referring to Table 9, the maximum number of RBs that can be used in each bandwidth is determined according to the bandwidth size and the spectrum utilization. In the disclosure, for the convenience of explanation, an example of a bandwidth smaller than 5 MHz is assumed as a 3 MHz bandwidth or a 4 MHz bandwidth, and the maximum number of RBs determined based on a spectrum utilization of 90% and a subcarrier spacing of 15 kHz is referenced as an example of the number of RBs that can be used in each bandwidth. Therefore, the cases where the maximum numbers of RBs configurable for a 3 MHz bandwidth and a 4 MHz bandwidth are 15 RBs and 20 RBs, respectively, are considered. Of course, it is not limited to the above example, and the maximum number of RBs may be determined differently depending on other values of bandwidth, spectrum utilization, and subcarrier spacing. Since the maximum number of RBs that can be used for both 3 MHz bandwidth and 4 MHz bandwidth is smaller than 24 RBs, which is the minimum number of frequency resources configurable in CORESET#0, a new table needs to be introduced to configure CORESET#0 in 3 MHz or 4 MHz bandwidth.

When considering the number of frequency and time resources of CORESET#0 configurable in a bandwidth smaller than 5 MHz, in addition to the number of RBs available in the corresponding bandwidth, the resource configuration rules of CORESET and CORESET#0 must be satisfied. When configuring frequency and time resources of CORESET and CORESET#0 in a bandwidth smaller than 5 MHz, the conditions to be considered are as follows.

- Condition 1: The number of RBs ( $N_{\text{RB}}^{\text{CORESET}}$ ) constituting the CORESET in the frequency domain is less than or equal to the maximum number of RBs available in each bandwidth.

- Condition 2: The number of symbols ( $N_{\text{symb}}^{\text{CORESET}}$ ) constituting the CORESET in the time domain is less than or equal to 3.

- Condition 3: The number of REGs constituting the CORESET is a multiple of 6.
- Condition 4: When applying the CCE-to-REG mapping of the interleaver scheme, the number of REGs constituting the CORESET is a multiple of the product (LR) of the REG bundle size and the interleaver size.
  . Condition 4-1: The number of REGs constituting the CORESET#0 is a multiple of 12.

The above conditions are the conditions that must be satisfied when configuring CORESET and CORESET#0 in a bandwidth smaller than 5 MHz while maintaining the same configuration method of CORESET and CORESET#0 defined in the current standard. If there is a change in the configuration method of CORESET and CORESET#0, the contents or values of the corresponding conditions may change. For example, in the case of condition 2, if 4, which is greater than 3, is added as the number of symbols that can constitute the CORESET, $N_{\mathrm{symb}}^{\mathrm{CORESET}}$ may be changed to be less than or equal to 4. Also, in the case of condition 4, since the REG bundle size is set to 6 and the interleaver size is set to 2 in the CORESET#0 configuration as a condition required for applying interleaver mapping in the CCE-to-REG mapping equation, so the number of REGs that constitute the CORESET#0 must be a multiple of 12. However, if the CCE-to-REG equation is changed, or if the REG bundle size and interleaver size of the CORESET#0 are changed, the corresponding conditions may also change. In this embodiment, when there is no change in the conditions described above, the contents of resource configuration in the CORESET#0 are described in detail. Of course, even if there is a change in one of the above conditions, the contents described in this embodiment may be applied in the same manner.

Table 10 to Table 12 are examples of CORESET#0 resource configuration tables when the bandwidth is smaller than 5 MHz. In Table 10 to Table 12, the case is assumed that the SSB and CORESET multiplexing pattern uses the pattern supported by the existing standard. Therefore, it may be replaced with other pattern using cases or additional pattern supporting cases may be added. In addition, the offset values in Tables below may have a maximum value equal to the difference when the $N_{\mathrm{RB}}^{\mathrm{CORESET}}$ value is smaller than the maximum RB value that can be used in the bandwidth. For example, in the case of a system bandwidth of 4 MHz and the maximum available RB value of 20, if $N_{\mathrm{RB}}^{\mathrm{CORESET}}$ is 16 RBs, the maximum offset value configurable in resource configuration is 4 RBs, and if $N_{\mathrm{RB}}^{\mathrm{CORESET}}$ is 18 RBs, the maximum offset value is 2 RBs. Therefore, other offset values may also be considered as long as they are equal to or smaller than the maximum offset value. The examples shown in Table 10 to Table 12 only consider the case where SSB and CORESET#0 have the same SCS of 15 kHz and $N_{\mathrm{symb}}^{\mathrm{CORESET}}$ is not one symbol, but it is not limited to that case. The base station selects one case from the configuration table suitable for the system bandwidth and configures the CORESET#0 resource, and the UE can know the index information of the corresponding case through the pdcch-ConfigSIB1 field in the MIB. Since the number of bits expressing the index of the table indicating the number of RBs and symbols of CORESET#0 in pdcch-ConfigSIB 1 is set to 4, the maximum number of indexes may be limited to 16. The maximum index value in Table 10 to Table 12 may vary depending on the pdcch-ConfigSIB 1 field and is not limited to 16.

[Table 10]

| Index | SS/PBCH block and CORESET multiplexing pattern | Number of RBs $N_{\mathrm{RB}}^{\mathrm{CORESET}}$ | Number of Symbols $N_{\mathrm{symb}}^{\mathrm{CORESET}}$ | Offset (RBs) |
|---|---|---|---|---|
| 0 | 1 | 12 | 2 | 0 |
| 1 | 1 | 12 | 2 | 2 |
| 2 | 1 | 12 | 3 | 0 |
| 3 | 1 | 12 | 3 | 2 |
| 4~15 | Reserved | | | |

[Table 11]

| Index | SS/PBCH block and CORESET multiplexing pattern | Number of RBs $N_{\mathrm{RB}}^{\mathrm{CORESET}}$ | Number of Symbols $N_{\mathrm{symb}}^{\mathrm{CORESET}}$ | Offset (RBs) |
|---|---|---|---|---|
| 0 | 1 | 16 | 3 | 0 |
| 1 | 1 | 16 | 3 | 4 |

(continued)

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 2 | 1 | 18 | 2 | 0 |
| 3 | 1 | 18 | 2 | 2 |
| 4 | 1 | 20 | 3 | 0 |
| 5~15 | Reserved | | | |

[Table 12]

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 12 | 2 | 0 |
| 1 | 1 | 12 | 2 | 2 |
| 2 | 1 | 12 | 2 | 8 |
| 3 | 1 | 12 | 3 | 0 |
| 4 | 1 | 12 | 3 | 2 |
| 5 | 1 | 12 | 3 | 8 |
| 6 | 1 | 16 | 3 | 0 |
| 7 | 1 | 16 | 3 | 4 |
| 8 | 1 | 18 | 2 | 0 |
| 9 | 1 | 18 | 2 | 2 |
| 10 | 1 | 20 | 3 | 0 |
| 11~15 | Reserved | | | |

In the 5G system, an available bandwidth smaller than 5 MHz may be defined as one or plural. When two or more bandwidths are defined, a table corresponding to each bandwidth may be defined. For example, when 3 MHz and 4 MHz are available as a bandwidth smaller than 5 MHz, Table 10 may be used when the bandwidth is 3 MHz, and Table 11 may be used when the bandwidth is 4 MHz. At this time, it is assumed that the UE knows the size of the bandwidth operated by the base station in advance or knows information about which table will be applied through the initial access step.

In another method, when two or more bandwidths are defined, one table may be applied regardless of the bandwidth, and the value of a configurable index may be limited according to the size of the system bandwidth. For example, when 3 MHz and 4 MHz are available as a bandwidth smaller than 5 MHz, Table 12 may be commonly used regardless of the bandwidth size. At this time, if the system bandwidth is 3 MHz, the index values configurable by the base station based on Table 12 are limited to {0, 1, 3, 4}. However, if the system bandwidth is 4 MHz, all configurable index values may be available or limited. If the index values configurable at a bandwidth of 4 MHz are limited to values other than {0, 1, 3, 4}, the UE can know which bandwidth the system operates at, 3 MHz or 4 MHz, based on the index values alone.

<Second Embodiment>

The second embodiment describes a method for enhancing performance even at a limited frequency when a base station supporting NR transmits a PDCCH in a bandwidth smaller than 5 MHz. The CORESET#0 configurations to which the method described in the second embodiment can be applied include, but are not limited to, the configurations described in the first embodiment.

If it is assumed that a band smaller than 5 MHz is operated so that existing NR UEs cannot initially access, a CORESET can be newly constituted and reflected in the tables specified in the first embodiment. For example, unlike the previous case where the number of symbols configurable in the CORESET is limited to a maximum of 3, when 4 or 6 symbols constitute the CORESET, an index considering the new number of symbols may be added to the tables.

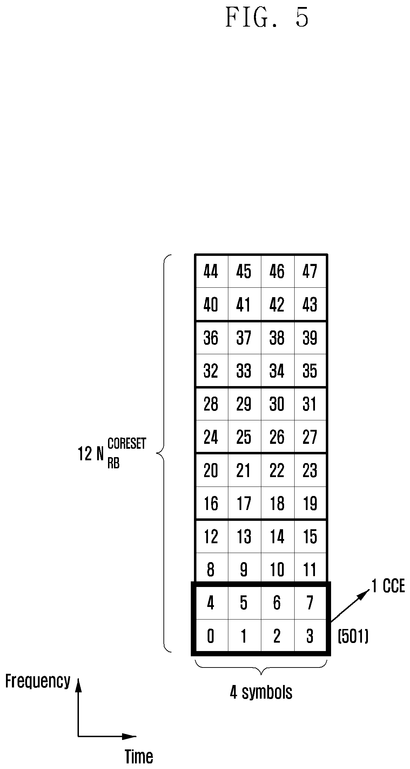

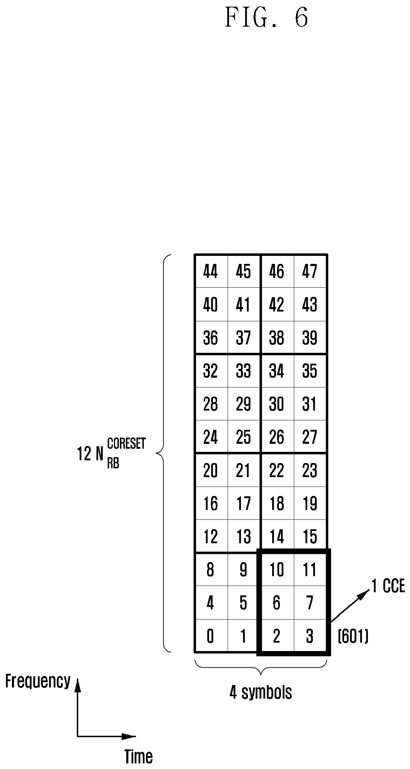

FIGS. 5 and 6 are diagrams showing examples of a method for increasing the number of symbols configurable in one CORESET when resources of CORESET are configured in a band smaller than 5 MHz. In FIGS. 5 and 6, the number of RBs and the number of symbols constituting one CORESET are 12 and 4, respectively, for example, but this is only exemplary. The values are not limited to those shown in FIGS. 5 and 6, and a greater number of symbols (e.g., $N_{symb}^{CORESET}=6$) may be configured. In the following description, methods for increasing the number of symbols configurable in one CORESET are collectively referred to as Method 1.

FIG. 5 shows an example of REG indexes of possible CORESET resources when the minimum value of possible REG bundling size increases by the same value as the value of $N_{symb}^{CORESET}$ increases. Based on the REG indexes in FIG. 5, CCE-to-REG mapping can be performed between CCEs forming the PDCCH and REGs constituting the CORESET. That is, unlike the existing NR where the number of REGs constituting the CCE is defined as 6, it is characterized in that it can be configured as a multiple of the number of symbols constituting the CORESET. According to 501, the number of REGs constituting the CCE may be configured as 8, but this may be configured differently depending on the number of RBs of frequency resources constituting the CCE.

FIG. 6 is an example showing a case where the value of $N_{symb}^{CORESET}$ increases, but the REG bundling size and the number of REGs constituting the CCE are limited to {2, 3, 6} and 6, respectively, like the existing NR. Since the REG bundling size must be maintained the same as before, REGs corresponding to other CCEs may be in the same frequency resource index as shown in 601.

A method for allocating CORESET resources with a symbol number greater than 3 and mapping a PDCCH to the corresponding CORESET may be considered as various methods through various combinations of parameters that configure CORESET and PDCCH transmission, such as the number of REGs forming a CCE, CCE indexing, CCE-to-REG mapping method, and bundling size, and is not limited to the above examples.

As another method, there is a method for repeatedly transmitting a PDCCH mapped to one CORESET on different time resources of the same size. Currently, in the case of CORESET#0, repetition transmission is not supported. Therefore, a method of supporting repetition transmission in CORESET#0 as well to gain performance benefits through repetition transmission in a limited frequency band may be considered.

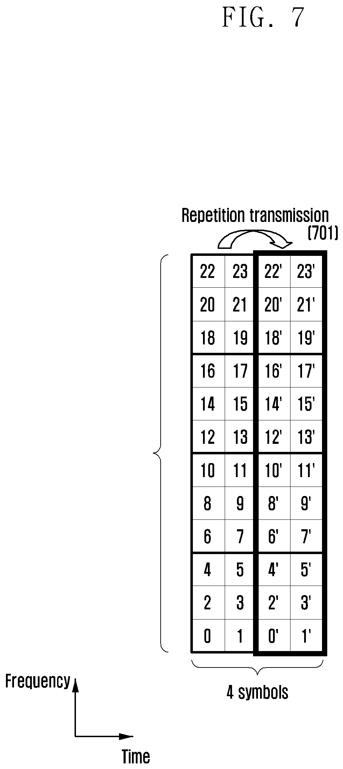

FIG. 7 is a diagram showing examples of a method for repeatedly transmitting the same PDCCH through distinct time resources. FIG. 7 shows the case where the same PDCCH is repeatedly transmitted twice 701 through distinct CORESET resources. This is only one example, and the number of times the PDCCH is repeatedly transmitted is not limited to this. In addition, although FIG. 7 shows the case where the PDCCH is repeatedly transmitted in consecutive time resources, the PDCCH may be repeatedly transmitted and searched in non-consecutive time resources. The CORESET resources to which the repeatedly transmitted PDCCH is mapped may be allocated apart from each other within the same slot or may be allocated and transmitted in different slots. In addition, when PDCCH repetition transmissions are made at certain time intervals, one or more SSBs may be located between the PDCCH repetition transmissions. In the following description, methods for repeatedly transmitting the PDCCH mapped to one CORESET in different time resources of the same size are collectively referred to as Method 2.

In the case where Method 2 is applied, information must be provided to the UE regarding in which time resource the PDCCH repetition transmission will occur. That is, the UE must know when the next PDCCH transmission will occur after the first PDCCH transmission. If the PDCCH repetition transmission is performed through CORESET#0, a relative position between the first PDCCH transmission time and the PDCCH repetition transmission time may be provided to the UE. This value may always be a fixed value, or may be provided together with the search space#0 table. If only the information regarding where the same PDCCH is transmitted is given, the UE can receive the PDCCH by using information of the first PDCCH transmission when searching for the second or subsequent PDCCH transmission without the need for blind decoding. Another method is to associate multiple search spaces with PDCCH repetition transmission. Currently, in CORESETs other than CORESET#0, two-time repetition transmission is supported, and two related search spaces are provided so that the same PDCCH is always repeatedly transmitted in the related search spaces. This method may be used in the same way when the system is operated in a small bandwidth. However, in the case of CORESET#0, since PDCCH needs to be received in the initial access step, it may be before the related search space information is configured in the UE. Therefore, a new search space#0 configuration table may be defined so that information on which search space#0s are related is reflected.

As one of the methods for enhancing the reception performance of repeatedly transmitted PDCCH, the UE may perform joint channel estimation when receiving the repeatedly transmitted PDCCH. This may be applied when the PDCCH is repeatedly transmitted in a continuous time as shown in FIG. 7. This is because it can be assumed that repetition transmission in a continuous time has little change in the channel. However, the joint channel estimation may be applied only when a cycling precoder is not applied in transmitting the PDCCH. Applying the cycling precoder in PDCCH transmission is a base station implementation and thus is not specified in the standard, but in order to support the UE to perform the joint channel estimation, information on whether the cycling precoder is applied in transmitting the PDCCH or whether the UE can use the joint channel estimation in receiving the PDCCH must be provided. In the case of CORESET#0, the corresponding information may be reflected in the new configuration table defined in the first embodiment. For example, referring to Table 13, through the Number of Repetition column, it is possible to configure how many times the PDCCH is repeatedly transmitted in the configuration of the corresponding CORESET#0. In addition, information on whether the cycling precoder is applied may also be included in the CORESET#0 configuration table through the Cycling Precoder column. The table below is an example, and the number of PDCCH repetition transmissions is not limited to 2. Besides, for the number of CORESET RBs and the number of symbols, values other than 12 and 2 presented below may be used if the conditions described in the first embodiment are met.

[Table 13]

| Index | SS/PBCH block and CORESET multiplexing pattern | Number of RBs $N_{RB}^{CORESET}$ | Number of Symbols $N_{symb}^{CORESET}$ | Offset (RBs) | Number of Repetition | Cycling Precoder |
|---|---|---|---|---|---|---|
| 0 | 1 | 12 | 2 | 0 | 2 | Not applied |
| 1 | 1 | 12 | 2 | 2 | 2 | Not applied |
| 2 | 1 | 12 | 2 | 0 | 2 | Applied |
| 3 | 1 | 12 | 2 | 2 | 2 | Applied |
| 4-15 | Reserved | | | | | |

Also, in the case of supporting Method 2, there is a method of receiving configuration information on how to repeatedly transmit PDCCH via CORESET#0 through the CORESET#0 configuration table as shown in Table 13, but it is also possible to receive configuration on the PDCCH repetition transmission method via CORESET#0 through information in the MIB at the initial access. For example, as shown in Table 14, information corresponding to spare among the information included in the MIB may be used as pdcch-Repetition indicating whether PDCCH repetition transmission is supported.

[Table 14]

| Order | MIB information | Pay load [bit(s)] |
|---|---|---|
| 1 | systemFrameNumber | 6 |
| 2 | subCarrierSpacingCommon | 1 |
| 3 | ssb-SubcarrierOffset | 4 |
| 4 | dmrs-TypeA-Position | 1 |
| 5 | pdcch-ConfigSIB1 | 8 |
| 6 | cellBarred | 1 |
| 7 | intraFreqReselection | 1 |
| 8 | pdcch-Repetition | 1 |

Or, in the case of a bandwidth of 5 MHz or less that the existing UE cannot access, the MIB information for the corresponding bandwidth and each payload may be changed. Referring to Table 15, assuming a small bandwidth, the information of ssb-Subcarrier Offset may have a payload of less than 4 bits. Or, in the case of a small bandwidth, since many cases are not considered in the CORESET#0 resource configuration, there is a method of reducing the number of payload bits corresponding to pdcch-ConfigSIB1 by reducing the total number of indexes that must be supported in the CORESET#0 and Search space#0 configuration table. The payload bits reduced in other information may be used to indicate PDCCH configuration information, such as the number of PDCCH repetition transmissions indicated at index 8 and whether to apply the cycling precoder indicated at index 9. That is, the MIB table is reconstructed as shown below differently from the existing UE, so that UEs using a specific bandwidth (<5 MHz) may proceed with the initial access by applying the MIB table below. Table 15 is only an example, and specific MIB information names and payload values may vary.

[Table 15]

| Order | MIB information | Pay load [bit(s)] |
|---|---|---|
| 1 | systemFrameNumber | 6 |
| 2 | subCarrierSpacingCommon | 1 |
| 3 | ssb-SubcarrierOffset | 3 |
| 4 | dmrs-TypeA-Position | 1 |
| 5 | pdcch-ConfigSIB1 | 6 |
| 6 | cellBarred | 1 |
| 7 | intraFreqReselection | 1 |
| 8 | Numof-PDCCH-Rep | 2 |
| 9 | Cycling-precoder | 1 |
| 10 | reserve | 1 |

As yet another method, it can be assumed that a system with a bandwidth smaller than 5 MHz supported by the existing NR always performs PDCCH repetition transmission to improve performance. In this case, as long as the UE is aware that the system has a bandwidth smaller than 5 MHz, the UE can operate assuming that PDCCH through CORESET#0 is always repeatedly transmitted. At this time, configurations related to PDCCH repetition transmission, such as the number of PDCCH repetition transmissions and whether to apply a cycling precoder, may be defined in advance or provided by the above-described method.

<Third Embodiment>

The third embodiment describes a process when a UE initially accesses a wireless communication system that supports a small bandwidth. The UEs that access a system operated at a bandwidth smaller than 5 MHz may be broadly divided into two types. One type is a UE capable of access to only a specific bandwidth smaller than 5 MHz, and this characterized UE is called 'UE A' in the description. The other type is a UE capable of access to both a bandwidth supported by the existing NR system and a specific bandwidth smaller than 5 MHz, and this UE is called 'UE B'.

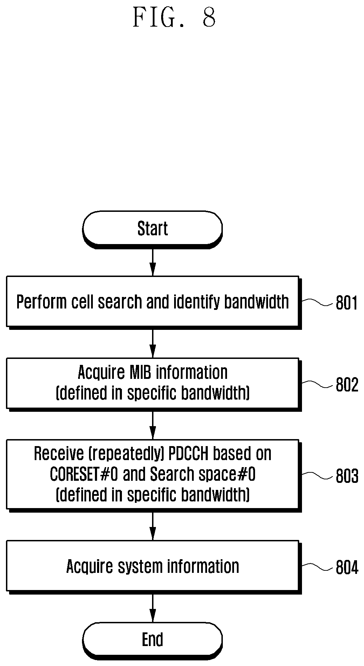

FIG. 8 is a diagram showing a process when a specific UE initially accesses a system operating in a specific bandwidth smaller than 5 MHz.

Specifically, FIG. 8 shows the process when 'UE B', which is a UE capable of accessing both a bandwidth supported by the existing NR system and a specific bandwidth smaller than 5 MHz, initially accesses a system that operates in a specific bandwidth smaller than 5 MHz.

It is assumed that the UE B performs cell search and can identify a bandwidth corresponding to a cell in the first step 801. A method of identifying the bandwidth may be implemented in various ways. One method is that since the UE receives SSB by using the channel and sync raster during the cell search process at the time of initial access, designing the raster used in a specific bandwidth smaller than 5 MHz differently from the existing bandwidth can allow the UE to identify the bandwidth during the cell search process. The design of the raster is not discussed in detail herein. As another method, in the case of a system that supports a small bandwidth, a part of the PBCH may not be transmitted due to a limited bandwidth. The UE can determine whether a part of the PBCH has been not transmitted or the entire PBCH has been transmitted, and based on this, identify the bandwidth. Upon determining that the cell is operating in a specific bandwidth, the UE can perform the operation of the second step 802.

In the second step 802, the UE can acquire MIB information defined in the specific bandwidth. The MIB information defined in the specific bandwidth may be the same as the MIB information specified in Table 8, or may be different from the MIB information specified in Table 8 as described using Table 14 and Table 15 as examples in the above embodiment.

In the third step 803, the UE can receive information on CORESET#0 and Search space#0 based on the MIB predefined in the specific bandwidth. Like the second step 802, the UE can receive a PDCCH based on information on CORESET#0 or Search space#0 predefined for the specific bandwidth. At this time, if the MIB defined for the specific bandwidth and the information on CORESET#0 and Search space#0 include a configuration for PDCCH repetition transmission in CORESET#0, the UE can repeatedly receive PDCCHs repeatedly transmitted from the base station to improve PDCCH reception performance.

In the fourth step 804, the UE can acquire information on PDSCH transmission based on the received PDCCH or the repeatedly received PDCCH, and can acquire additional system information.

The above-described steps in FIG. 8 may be omitted or changed in order, or any step not described may be added so that the disclosure can be performed.

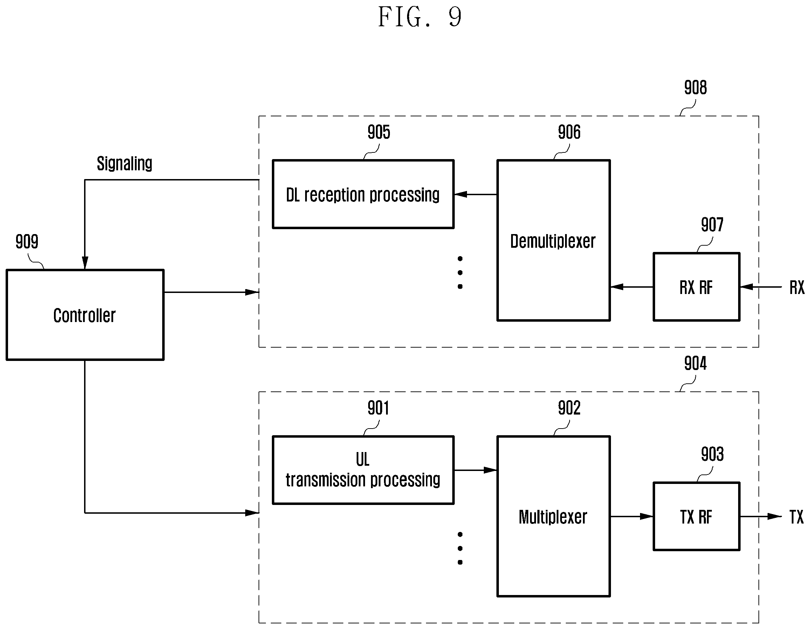

FIG. 9 is a diagram showing a UE transceiver device in a wireless communication system according to an embodiment of the disclosure. For the convenience of explanation, devices that are not directly related to the disclosure may be omitted from the illustration and description.

With reference to FIG. 9, the UE may include a transmitter 904 composed of an uplink transmission processing block 901, a multiplexer 902, and a transmission RF block 903, a receiver 908 composed of a downlink reception processing block 905, a demultiplexer 906, and a reception RF block 907, and a controller 909. The controller 909 may control the respective component blocks of the receiver 908 for receiving a data channel or control channel transmitted by the base station as described above, and the respective component blocks of the transmitter 904 for transmitting an uplink signal.

In the transmitter 904 of the UE, the uplink transmission processing block 901 may perform processes such as channel coding and modulation and generate a signal to be transmitted. The signal generated in the uplink transmission processing block 901 may be multiplexed with another uplink signal by the multiplexer 902, signal-processed in the transmission RF block 903, and then transmitted to the base station.

The receiver 908 of the UE demultiplexes a signal received from the base station and distributes it to the respective downlink reception processing blocks. The downlink reception processing block 905 may perform processes such as demodulation and channel decoding on the downlink signal of the base station and acquire control information or data transmitted by the base station. The UE receiver 908 may apply the output result of the downlink reception processing block to the controller 909, thereby supporting the operation of the controller 909.

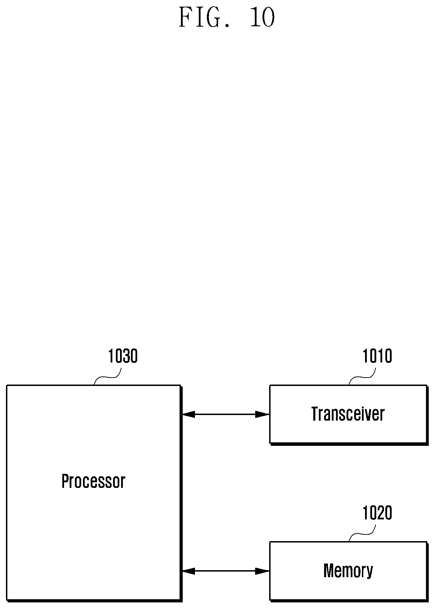

FIG. 10 is a block diagram showing an example of components of a UE according to an embodiment of the disclosure.

As shown in FIG. 10, the UE in the disclosure may include a processor 1030, a transceiver 1010, and a memory 1020. However, the components of the UE are not limited to this example. For example, the UE may include more or fewer components than the above-mentioned components. In addition, the processor 1030, the transceiver 1010, and the memory 1020 may be implemented in the form of a single chip. According to an embodiment, the transceiver 1010 in FIG. 10 may include the transmitter 904 and the receiver 908 in FIG. 9. In addition, the processor 1030 in FIG. 10 may include the controller 909 in FIG. 9.

According to an embodiment, the processor 1030 may control a series of processes so that the UE may operate according to the above-described embodiment of the disclosure. For example, according to the embodiment of the disclosure, the components of the UE may be controlled to perform a transmission and reception method of the UE depending on a bandwidth operated by a base station. The processor 1030 may be one or more, and by executing a program stored in the memory 1020, the processor 1030 may perform a transmission and reception operation of the UE in a wireless communication system that applies the above-described carrier aggregation of the disclosure.

The transceiver 1010 may transmit or receive signals to or from the base station. The signals transmitted or received to or from the base station may include control information and data. The transceiver 1010 may be composed of an RF transmitter that up-converts and amplifies the frequency of a signal to be transmitted, an RF receiver that low-noise amplifies a received signal and down-converts the frequency, etc. However, this is only one embodiment of the transceiver 1010, and the components of the transceiver 1010 are not limited to the RF transmitter and the RF receiver. In addition, the transceiver 1010 may receive a signal through a radio channel and output it to the processor 1030, and may also transmit a signal outputted from the processor 1030 through a radio channel.

According to an embodiment, the memory 1020 may store programs and data required for the operation of the UE. In addition, the memory 1020 may store control information or data included in signals transmitted or received by the UE. The memory 1020 may be composed of a storage medium or a combination of storage media such as a ROM, a RAM, a hard disk, a CD-ROM, and a DVD. In addition, the memory 1020 may be plural. According to an embodiment, the memory 1020 may store a program for performing transmission and reception operations of the UE depending on whether the base station mode of the embodiments of the disclosure described above is a base station energy saving mode or a base station normal mode.

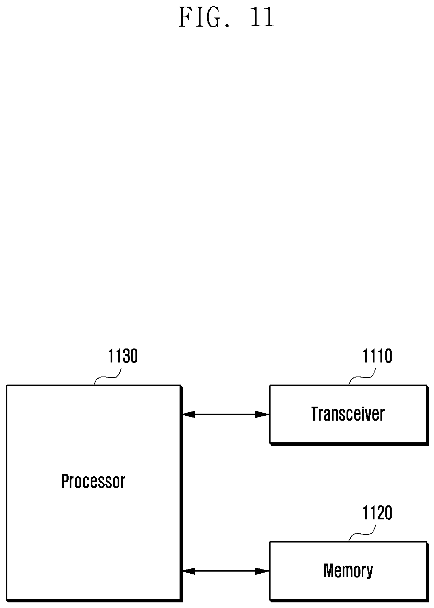

FIG. 11 is a block diagram showing an example of components of a base station according to an embodiment of the disclosure.

As shown in FIG. 11, the base station in the disclosure may include a processor 1130, a transceiver 1110, and a memory 1120. However, the components of the base station are not limited to this example. For example, the base station may include more or fewer components than the above-mentioned components. In addition, the processor 1130, the transceiver 1110, and the memory 1120 may be implemented in the form of a single chip.

According to an embodiment, the processor 1130 may control a series of processes so that the base station may operate according to the above-described embodiment of the disclosure. For example, according to the embodiment of the disclosure, the components of the base station may be controlled to perform a method of scheduling a UE depending on whether the base station mode is a base station energy saving mode or a base station normal mode. The processor 1130 may be one or more, and by executing a program stored in the memory 1120, the processor 1130 may perform the method of scheduling the UE depending on whether the base station mode of the disclosure is the base station energy saving mode or the base station normal mode.

The transceiver 1110 may transmit or receive signals to or from the UE. The signals transmitted or received to or from the UE may include control information and data. The transceiver 1110 may be composed of an RF transmitter that up-converts and amplifies the frequency of a signal to be transmitted, an RF receiver that low-noise amplifies a received signal and down-converts the frequency, etc. However, this is only one embodiment of the transceiver 1110, and the components of the transceiver 1110 are not limited to the RF transmitter and the RF receiver. In addition, the transceiver 1110 may receive a signal through a radio channel and output it to the processor 1130, and may also transmit a signal outputted from the processor 1130 through a radio channel.

According to an embodiment, the memory 1120 may store programs and data required for the operation of the base station. In addition, the memory 1120 may store control information or data included in signals transmitted or received by the base station. The memory 1120 may be composed of a storage medium or a combination of storage media such as a ROM, a RAM, a hard disk, a CD-ROM, and a DVD. In addition, the memory 1120 may be plural.

In the above-described detailed embodiments, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Meanwhile, although preferred embodiments of the disclosure are disclosed and specific terms are used in the description and drawings, this is intended in general to easily explain the technical contents of the disclosure and help in understanding the disclosure, and is not intended to limit the scope of the disclosure. It is apparaent to a person having ordinary skill in the art to which the disclosure pertains that other modified examples based on the technical idea of the disclosure are possible. In addition, the above respective embodiments may be combined and operated as needed.

Meanwhile, although specific embodiments are described in the detailed description of the disclosure, a variety of modifications are possible without departing from the scope of the disclosure. Therefore, the scope of the disclosure should not be limited to the described embodiments, but should be determined not only by claims given below but also by equivalents of claims.

**Claims**

1. A method performed by a terminal in a communication system, the method comprising:

   receiving a master information block (MIB) including information on a control resource set (CORESET) and a search space associated with system information;
   receiving a physical downlink control channel (PDCCH) based on the information on the CORESET and the search space associated with the system information; and
   receiving the system information based on the PDCCH,
   wherein the MIB indicates one index among a plurality of indexes corresponding to a number of resource blocks (RBs) and a number of symbols in the CORESET associated with the system information,
   the MIB is associated with a frequency band having a channel bandwidth size smaller than 5 MHz, and
   the plurality of indexes corresponding to the number of RBs and the number of symbols in the CORESET associated with the system information include at least one index corresponding to the number of RBs smaller than 24 RBs.

2. The method of claim 1, wherein the at least one index corresponding to the number of RBs smaller than 24 RBs includes:

   a first index corresponding to the number of RBs 12 and the number of symbols 2; and
   a second index corresponding to the number of RBs 12 and the number of symbols 3.

3. The method of claim 1, wherein the MIB is received in a synchronization raster defined for the channel bandwidth size smaller than 5 MHz.

4. The method of claim 1, wherein the at least one index corresponding to the number of RBs smaller than 24 RBs corresponds to RB offset 0.

5. The method of claim 1, wherein the MIB is associated with a frequency band having a channel bandwidth size of 3 MHz.

6. A method performed by a base station in a communication system, the method comprising:

transmitting a master information block (MIB) including information on a control resource set (CORESET) and a search space associated with system information;
transmitting a physical downlink control channel (PDCCH) based on the information on the CORESET and the search space associated with the system information; and
transmitting the system information based on the PDCCH,
wherein the MIB indicates one index among a plurality of indexes corresponding to a number of resource blocks (RBs) and a number of symbols in the CORESET associated with the system information,
the MIB is associated with a frequency band having a channel bandwidth size smaller than 5 MHz, and
the plurality of indexes corresponding to the number of RBs and the number of symbols in the CORESET associated with the system information include at least one index corresponding to the number of RBs smaller than 24 RBs.

7. The method of claim 6, wherein the at least one index corresponding to the number of RBs smaller than 24 RBs includes:

a first index corresponding to the number of RBs 12 and the number of symbols 2; and
a second index corresponding to the number of RBs 12 and the number of symbols 3.

8. The method of claim 6, wherein the MIB is received in a synchronization raster defined for the channel bandwidth size smaller than 5 MHz.

9. The method of claim 6, wherein the at least one index corresponding to the number of RBs smaller than 24 RBs corresponds to RB offset 0.

10. The method of claim 6, wherein the MIB is associated with a frequency band having a channel bandwidth size of 3 MHz.

11. A terminal in a communication system, the terminal comprising:

a transceiver; and
a controller configured to:

receive a master information block (MIB) including information on a control resource set (CORESET) and a search space associated with system information,
receive a physical downlink control channel (PDCCH) based on the information on the CORESET and the search space associated with the system information, and
receive the system information based on the PDCCH,
wherein the MIB indicates one index among a plurality of indexes corresponding to a number of resource blocks (RBs) and a number of symbols in the CORESET associated with the system information,
the MIB is associated with a frequency band having a channel bandwidth size smaller than 5 MHz, and
the plurality of indexes corresponding to the number of RBs and the number of symbols in the CORESET associated with the system information include at least one index corresponding to the number of RBs smaller than 24 RBs.

12. The terminal of claim 11, wherein the at least one index corresponding to the number of RBs smaller than 24 RBs includes:

a first index corresponding to the number of RBs 12 and the number of symbols 2; and
a second index corresponding to the number of RBs 12 and the number of symbols 3.

13. The terminal of claim 11, wherein the MIB is received in a synchronization raster defined for the channel bandwidth size smaller than 5 MHz, and
the at least one index corresponding to the number of RBs smaller than 24 RBs corresponds to RB offset 0.

14. The terminal of claim 11, wherein the MIB is associated with a frequency band having a channel bandwidth size of 3 MHz.

15. A base station in a communication system, the base station comprising:

a transceiver; and
a controller configured to:

transmit a master information block (MIB) including information on a control resource set (CORESET) and a search space associated with system information,
transmit a physical downlink control channel (PDCCH) based on the information on the CORESET and the search space associated with the system information, and
transmit the system information based on the PDCCH,
wherein the MIB indicates one index among a plurality of indexes corresponding to a number of resource blocks (RBs) and a number of symbols in the CORESET associated with the system information,
the MIB is associated with a frequency band having a channel bandwidth size smaller than 5 MHz, and
the plurality of indexes corresponding to the number of RBs and the number of symbols in the CORESET associated with the system information include at least one index corresponding to the number of RBs smaller than 24 RBs.

# FIG. 1

Frame (114)

subframe (105)

. . .   . . .

Slot
(106)

Transmission
band $N_{BW}$
subcarriers
(104)

$N_{SC}^{RB}$
subcarriers
(110)

Resource element
(112)

$N_{symb}^{slot}$ symbols
(102)

Frequency

Time

# FIG. 2

# FIG. 3

UE                                                            gNB

① ——————— Random Access Preamble ———————▶
                    Message 1
                      (310)

◀——————— Random Access Response ——————— ②
                    Message 2
                      (320)

③ ——————— Scheduled Transmission ———————▶
                    Message 3
                      (330)

◀——————— Contention Resolution ——————— ④
                    Message 4
                      (340)

FIG. 4

401
UE

402
gNB

UE capability information request
410

UE capability information
420

## FIG. 5

$12\ N_{RB}^{CORESET}$

| 44 | 45 | 46 | 47 |
| 40 | 41 | 42 | 43 |
| 36 | 37 | 38 | 39 |
| 32 | 33 | 34 | 35 |
| 28 | 29 | 30 | 31 |
| 24 | 25 | 26 | 27 |
| 20 | 21 | 22 | 23 |
| 16 | 17 | 18 | 19 |
| 12 | 13 | 14 | 15 |
| 8 | 9 | 10 | 11 |
| 4 | 5 | 6 | 7 |
| 0 | 1 | 2 | 3 |

1 CCE
(501)

Frequency

Time

4 symbols

# FIG. 6

| | | | |
|---|---|---|---|
| 44 | 45 | 46 | 47 |
| 40 | 41 | 42 | 43 |
| 36 | 37 | 38 | 39 |
| 32 | 33 | 34 | 35 |
| 28 | 29 | 30 | 31 |
| 24 | 25 | 26 | 27 |
| 20 | 21 | 22 | 23 |
| 16 | 17 | 18 | 19 |
| 12 | 13 | 14 | 15 |
| 8 | 9 | 10 | 11 |
| 4 | 5 | 6 | 7 |
| 0 | 1 | 2 | 3 |

$12\ N_{RB}^{CORESET}$

1 CCE

(601)

4 symbols

Frequency

Time

FIG. 7

Repetition transmission
(701)

| | | | |
|---|---|---|---|
| 22 | 23 | 22' | 23' |
| 20 | 21 | 20' | 21' |
| 18 | 19 | 18' | 19' |
| 16 | 17 | 16' | 17' |
| 14 | 15 | 14' | 15' |
| 12 | 13 | 12' | 13' |
| 10 | 11 | 10' | 11' |
| 8 | 9 | 8' | 9' |
| 6 | 7 | 6' | 7' |
| 4 | 5 | 4' | 5' |
| 2 | 3 | 2' | 3' |
| 0 | 1 | 0' | 1' |

Frequency

4 symbols

Time

# FIG. 8

```
                    ┌─────────────┐
                    │    Start    │
                    └─────────────┘
                           │
                           ▼
       ┌──────────────────────────────────────────┐
       │  Perform cell search and identify bandwidth │──── 801
       └──────────────────────────────────────────┘
                           │
                           ▼
       ┌──────────────────────────────────────────┐
       │          Acquire MIB information          │──── 802
       │       (defined in specific bandwidth)      │
       └──────────────────────────────────────────┘
                           │
                           ▼
       ┌──────────────────────────────────────────┐
       │       Receive (repeatedly) PDCCH based on  │
       │         CORESET#0 and Search space#0       │──── 803
       │         (defined in specific bandwidth)    │
       └──────────────────────────────────────────┘
                           │
                           ▼
       ┌──────────────────────────────────────────┐
       │          Acquire system information        │──── 804
       └──────────────────────────────────────────┘
                           │
                           ▼
                    ┌─────────────┐
                    │     End     │
                    └─────────────┘
```

FIG. 9

EP 4 601 375 A1

FIG. 10

FIG. 11

1130

1110

Processor

Transceiver

1120

Memory

## INTERNATIONAL SEARCH REPORT

| International application No. |
| --- |
| **PCT/KR2023/017688** |

| A. | CLASSIFICATION OF SUBJECT MATTER |
| --- | --- |

**H04W 72/04**(2009.01)i; **H04W 72/23**(2023.01)i; **H04L 1/08**(2006.01)i; **H04L 5/00**(2006.01)i; **H04L 27/26**(2006.01)i

According to International Patent Classification (IPC) or to both national classification and IPC

| B. | FIELDS SEARCHED |
| --- | --- |

Minimum documentation searched (classification system followed by classification symbols)

H04W 72/04(2009.01); H04J 11/00(2006.01); H04L 27/26(2006.01); H04L 5/00(2006.01); H04W 48/10(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CORESET(control resource set), MIB(master information block), SS(search space), PDCCH(physical downlink control channel), index, RB(resource block), bandwidth, synchronization raster

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2022-076780 A (DENSO CORP.) 20 May 2022 (2022-05-20)<br>See paragraphs [0065]-[0102]; and figures 7-8. | 1-15 |
| A | KR 10-2018-0080700 A (SAMSUNG ELECTRONICS CO., LTD.) 12 July 2018 (2018-07-12)<br>See paragraphs [0022]-[0175]; and figures 1-12. | 1-15 |
| A | WO 2021-211055 A1 (PANASONIC INTELLECTUAL PROPERTY CORPORATION OF AMERICA) 21 October 2021 (2021-10-21)<br>See paragraphs [0046]-[0158]; and figures 1-29. | 1-15 |
| A | WO 2022-155219 A1 (IDAC HOLDINGS, INC.) 21 July 2022 (2022-07-21)<br>See paragraphs [0018]-[0124]; and figures 1A-12. | 1-15 |
| A | US 2022-0304014 A1 (QUALCOMM INCORPORATED) 22 September 2022 (2022-09-22)<br>See paragraphs [0041]-[0170]; and figures 1-17. | 1-15 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 February 2024** | **13 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2023/017688** |

| Patent document cited in search report | | | Publication date (day/month/year) | Patent family member(s) | | | Publication date (day/month/year) |
|---|---|---|---|---|---|---|---|
| JP | 2022-076780 | A | 20 May 2022 | CN | 116584137 | A | 11 August 2023 |
| | | | | EP | 4247078 | A1 | 20 September 2023 |
| | | | | US | 2023-0276319 | A1 | 31 August 2023 |
| | | | | WO | 2022-102256 | A1 | 19 May 2022 |
| KR | 10-2018-0080700 | A | 12 July 2018 | CA | 3049195 | A1 | 12 July 2018 |
| | | | | CN | 110168972 | A | 23 August 2019 |
| | | | | CN | 110168972 | B | 20 April 2021 |
| | | | | CN | 113206728 | A | 03 August 2021 |
| | | | | EP | 3539232 | A1 | 18 September 2019 |
| | | | | EP | 3539232 | B1 | 18 November 2020 |
| | | | | EP | 3790218 | A1 | 10 March 2021 |
| | | | | EP | 3790218 | B1 | 16 November 2022 |
| | | | | JP | 2020-504971 | A | 13 February 2020 |
| | | | | JP | 2022-084828 | A | 07 June 2022 |
| | | | | JP | 7046955 | B2 | 04 April 2022 |
| | | | | JP | 7374247 | B2 | 06 November 2023 |
| | | | | US | 10492157 | B2 | 26 November 2019 |
| | | | | US | 11026199 | B2 | 01 June 2021 |
| | | | | US | 2018-0192383 | A1 | 05 July 2018 |
| | | | | US | 2020-0045658 | A1 | 06 February 2020 |
| | | | | WO | 2018-128427 | A1 | 12 July 2018 |
| WO | 2021-211055 | A1 | 21 October 2021 | AU | 2021-255047 | A1 | 24 November 2022 |
| | | | | BR | 112022019954 | A2 | 14 March 2023 |
| | | | | CN | 115380602 | A | 22 November 2022 |
| | | | | EP | 4136913 | A1 | 22 February 2023 |
| | | | | JP | 2023-521568 | A | 25 May 2023 |
| | | | | KR | 10-2023-0006811 | A | 11 January 2023 |
| | | | | MX | 2022011947 | A | 21 October 2022 |
| | | | | SG | 10202003546 | A | 29 November 2021 |
| | | | | US | 2023-0156752 | A1 | 18 May 2023 |
| WO | 2022-155219 | A1 | 21 July 2022 | AU | 2022-208266 | A1 | 20 July 2023 |
| | | | | CN | 116803140 | A | 22 September 2023 |
| | | | | KR | 10-2023-0130050 | A | 11 September 2023 |
| US | 2022-0304014 | A1 | 22 September 2022 | CN | 113994618 | A | 28 January 2022 |
| | | | | EP | 3991337 | A1 | 04 May 2022 |
| | | | | EP | 3991337 | A4 | 18 January 2023 |
| | | | | WO | 2020-258216 | A1 | 30 December 2020 |

Form PCT/ISA/210 (patent family annex) (July 2022)